# EUROPEAN PATENT APPLICATION

(11) **EP 4 693 893 A2**
(43) Date of publication of application: **11.02.2026**
(21) Application number: 25193660.5
(22) Date of filing: 04.08.2025
(51) Int. Cl.: H02S 40/36

(54) **MECHANICAL/ELECTRICAL SOLAR MODULE INTERFACE**

(30) Priority: 08.08.2024 US 202463680675 P; 16.06.2025 US 202519239750
(71) Applicant: DS2.0, LLC, Portland, TN 37148 (US)
(72) Inventor: SOLON, Dean, Gallatin, TN 37066 (US)
(74) Representative: Fish & Richardson P.C.

(57) **Abstract**

This disclosure describes a system for making physical and electrical connections of solar modules to torque tubes. In some implementations, a system includes a bracket and one or more connectors. The bracket includes an electrical interface. The bracket is configured to (i) connect to a solar module and (ii) retain a torque tube within a perimeter of the bracket. The one or more connectors are configured to interface with corresponding connectors of the torque tube upon insertion of the torque tube within the perimeter of the bracket. The insertion of the torque tube within the perimeter of the bracket creates both of a physical and an electrical connection with the torque tube.

## Description

### CROSS-REFERENCE TO RELATED APPLICATION

This application claims priority to U.S. Provisional Application No. 63/680,675, filed on August 8, 2024.

### BACKGROUND

Solar panels ("panels") in solar arrays (e.g., in solar fields) are often secured to torque tubes that are configured to tilt in order to track the sun and increase power the solar power generated by the panels. Generally, the panels are mechanically connected to the torque tube, and then electrical connections are made separately.

### SUMMARY

The present disclosure involves systems, devices, and apparatus for providing both an electrical connection and mechanical connection when a solar module is installed on a torque tube. Described herein are techniques for facilitating both of the mechanical and electrical connections in a way that reduces (i) installation complexity, (ii) the time required to install the solar modules on the torque tubes, (iii) the tools required, and (iv) the skills required by installers.

In some implementations, a system includes a bracket including an electrical interface, the bracket configured to (i) connect to a solar module and (ii) retain a torque tube within a perimeter of the bracket; and one or more connectors configured to interface with corresponding connectors of the torque tube upon insertion of the torque tube within the perimeter of the bracket, wherein the insertion of the torque tube within the perimeter of the bracket creates both of a physical and an electrical connection with the torque tube.

A shape of the bracket can form an interior void in which the torque tube is received. The one or more connectors can be located on an interior top surface of the backet.

The one or more connectors can extend away from the interior top surface of the bracket, and are configured to engage with conductors that are located at a top surface of the torque tube.

The bracket can include an access member that is pivotable or rotatable relative to a body of the bracket. The access member can be configured to pivot or rotate between an open state and a closed state.

The access member can include a rotating member that is located at an end of the access member and configured to maintain separation between the torque tube and the solar module. The access member can include a locking mechanism that is configured to secure or lock the access member in the closed state. The locking mechanism can include one or more of a magnet, a latch, or a screw.

The electrical connection can be automatically made when the bracket is placed on the torque tube. The electrical connection can be between conductors located within a recess of the torque tube and protrusions of the bracket. The one or more connectors can include two or more protrusions that are laterally offset from each other within the frame. The one or more connectors can include two or more protrusions that are longitudinally offset from each other within the frame.

The bracket can be attached to a mounting plate having a width that is greater than the width of the bracket. The bracket can include an electrical connector configured to electrically connect the bracket to the solar module.

The solar module can include one or more junction boxes, including terminals, that facilitate a transfer of power from the solar module. A positive terminal connection of the one or more junction boxes has a different connection configuration than a negative terminal connection of the one or more junction boxes.

The bracket can include a void configured to route cables between the solar module and the torque tube. First connectors of the cables can be mounted to the bracket. The torque tube can include second connectors that are configured to mate with the first connectors that are mounted to the bracket. One or more of the first connectors or the second connectors can include an engagement mechanism that is configured to snap into a fixed location upon exertion of a sufficient amount of force.

The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIGs. 1A and 1B are illustrations of an example system in which both electrical and mechanical connections are made when a solar module is mounted on a torque tube.
FIGs. 2A and 2B are illustrations of another example system in which both electrical and mechanical connections are made when a solar module is mounted on a torque tube.
FIG. 3 is an illustration of an example system in which two modules and are mounted to a torque tube by two different brackets.
FIG. 4 is an illustration of an example system in which a bracket is mounted to a module.
FIG. 5 is an illustration of an example connectorized solar module/panel.
FIG. 6 is an illustration of an example bracket that can connect to the connectorized solar module/panel.
FIG. 7 is an illustration of an example torque tube that includes conductors and configured to facilitate an electrical connection between a solar module and other components of a solar field installation (e.g., inverter).
FIG. 8 is an illustration of an example solar module that includes junction boxes and connectors.
FIG. 9 is an illustration of an example bracket in which the electrical interface forms a conduit through which cables/connectors of a solar module are passed.
FIG. 10 is an illustration of an example torque tube that includes connectors housed within the torque tube.
FIG. 11 is an illustration of an example solar module that includes panel mount connectors.
FIG. 12 is an illustration of an example bracket that includes secured connectors in the electrical interface.
FIG. 13 is an illustration of an example torque tube to which the bracket can be attached.
FIG. 14 is an illustration of an example system that includes secured connectors.

### DETAILED DESCRIPTION

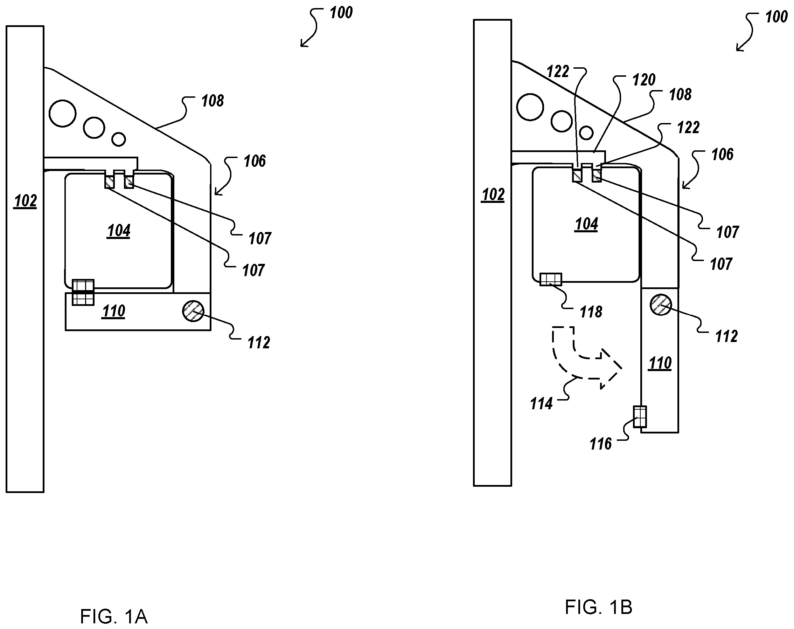

FIGs. 1A and 1B are illustrations of an example system 100 in which both electrical and mechanical connections are made when a solar module 102 is mounted on a torque tube 104. In FIG. 1A, the solar module 102 ("module") is connected to a bracket 106 that is configured to (i) mechanically secure the module 102 to the torque tube 104 and (ii) make an electrical connection to conductors 107 that are located within (or on) the torque tube 104. For example, when the bracket 106 is placed over the torque tube 104, the shape of the bracket 106 can prevent the module 102 from disengaging from the torque tube 104. In FIG. 1A, the back of the bracket 106 (e.g., the portion distal relative to the connection between the bracket 106 and the module 102) can have an "L" shape, a "C" shape, a "J" shape, a "U" shape, or another similar shape that includes an interior void, such that the torque tube 104 is maintained within the perimeter of the bracket 106 once the bracket 106 is placed on the torque tube 104. In other words, the bracket 106 is configured to receive the torque tube 104 within the perimeter of the bracket 104, and maintain the torque tube 104 within the perimeter of the bracket 106.

In some implementations, the bracket 106 can include a body 108 that is configured to interface with, connect, otherwise secure the bracket 106 to the module 102. In some implementations, the bracket 106 is integrated as part of the frame of the module 102 when the module 102 is manufactured. In some implementations, the bracket 106 can be secured to the module 102 using screws, bolts, clasps, keyholes, or other types of connectors after the module 102 has been manufactured.

The bracket 106 can include an access member 110 that is configured to maintain the position of the torque tube 104 within the perimeter of the bracket 106 even when the orientation of the module 102 and bracket 106 changes (e.g., as the torque tube 104 repositions the module 102 to track the sun). As shown, the access member 110 is shown as a segment of the bracket 106 that is pivotably/rotatably attached to the body 108 of the bracket 106 with a fastener 112. The access member 110 can be attached to the body 108 using a hinge, a shoulder bolt, a bushing, a dowel pin, a rotary bearing, or another fastener that allows the access member 110 to rotate relative to the body 108.

The bracket 106 can be formed from a variety of materials that are sufficiently strong to support the weight of a solar module. Some example materials that can be used to form some or all of the bracket 106 include aluminum, steel (e.g., stainless, galvanized, or coated), and/or zinc alloys). Plastics and rubbers can also be used for portions of the bracket as appropriate.

FIG 1A is an illustration of the access member 110 in a closed state. The closed state is a state in which the access member 110 is oriented (or otherwise positioned) (i) in a manner that prevents the torque tube 104 from being removed from the interior of the bracket 106 and/or in a manner that closes off (e.g., reduces) access to the interior of the bracket 106 in a specified direction. For example, as shown in FIG. 1A, the access member 110 is oriented such that the interior edges of the access member 110 and the body 108 surround three sides of the torque tube 104, with the module 102 being adjacent to the last side of the torque tube 104. In this way, the torque tube is surrounded by the bracket 106 and the module 102 (e.g., on all sides), thereby preventing the torque tube 104 from being removed from the interior of the bracket 106. Note that it is not necessary in all situations for the torque tube 104 to be surrounded on all sides, or fully surrounded, for the access member 110 to be in the closed state. Also note that the module 102 is shown offset from (e.g., not in contact with), and that some space between the torque tube 104 and other components of the system 100 exists in the illustration for easier viewing, but configurations can result in contact between the torque tube 104 and any or all other components.

FIG. 1B is an illustration of the access member 110 in an open state. The open state is a state in which the access member 110 is oriented (or otherwise positioned) in a manner that does not prevent, or facilitates, removal of the torque tube 104 from the interior of the bracket 106, and/or opens (e.g., increases) access to the interior of the bracket 106. For example, as shown, the access member 110 has been rotated down, as indicated by the dashed arrow 114, thereby leaving the bottom of the torque tube 104 unrestrained and accessible. In this example, the torque tube 104 can be removed from within the interior of the bracket 106 by lifting the module 102 and/or bracket 106 off the torque tube 104, or rotating the torque tube 104 to reposition the bottom of the torque tube 104 (as depicted in FIG. 1B), in a manner such that gravity will cause the model 102 and bracket 106 to slide off the torque tube 104.

As shown in FIG. 1B, the bracket 106 can include a locking mechanism 116 that is configured to secure, or lock, the access member 110 in the closed state. The locking mechanism can be a magnet, a latch (e.g., a latch body or a latch bolt), a screw or another mechanical fastener, a snap, or any other mechanism capable of maintaining the access member 110 in the closed state (e.g., by requiring at least a minimum amount of force to be applied to remove the access member from the closed state). Examples of magnets that could be used include rare earth magnets, such as Neodymium Magnets (NdFeB), which are often used in magnetic clasp applications, Samarium Cobalt Magnets (SmCo), which are resistant to corrosion while providing a strong magnetic connections for magnetic clasp applications. The locking mechanism 116 can be affixed to the access member 110 using an adhesive or fastener. Alternatively, the locking mechanism can be embedded into the access member 110 while being manufactured.

To facilitate securing the access member 110 in the locked state, the torque tube 104 can include a complementary locking mechanism 118, as shown in FIG. 1B. The complementary locking mechanism 118 is configured to engage with the locking mechanism 116 of the access member 110 to maintain the access member 110 in the closed state. For example, the complementary locking mechanism can be a magnet similar to those discussed above, or a latch body/latch bolt configured to engage with the latch bolt/latch body of the locking mechanism 116. In situations where the locking mechanism 116 is a screw or bolt, the complementary locking mechanism 118 could be an appropriately sized screw/bolt hole, a nut, or another mechanical device configured to receive the screw or bolt in a secure manner.

As previously mentioned, the system 100 is configured to facilitate an electrical connection to the module 102 in addition to the mechanical connection between the module 102, bracket 106, and torque tube 104 described above. For example, the bracket 106 can include an electrical interface 120 configured to electrically connect the module 102 to the conductors 107 located at the torque tube 104, as illustrated by FIG. 1B. As shown, the conductors 107 are shown as embedded, or otherwise contained within, the torque tube 104. However, the conductors 107 could be secured to the outside of the torque tube 104, or in an electrical connector that is secured to the torque tube 104. The electrical interface 120 includes at least a pair of conductors (e.g., wires) that connect to the module 102, to facilitate transfer of power from the module 102 to the conductors 107 of the torque tube.

In some implementations, the electrical connection between the module 102 and the conductors 107 of the torque tube 104 is automatically made when the bracket 106 is placed on the torque tube 104. For example, as shown, the conductors 107 of the torque tube 104 can be located within recesses in the torque tube 104 (or in raised portions of the torque tube), and the electrical interface 120 of the bracket 106 can have protrusions 122 (or other connection points) that are configured to engage with the recesses in the torque tube 104 that house the conductors 107, thereby creating an electrical connection between the electrical interface 120 and the conductors 107. To facilitate this automatic electrical connection, the torque tube 104 can be configured to have electrical connectors that are complementary to those of the electrical connection interface of the bracket 106. For example, one of the conductors 107 can have a male electrical connector while the other conductor 107 can have a female electrical connector. In this example, the electrical interface 120 of the bracket 106 can have one male electrical connector and one female electrical connector. In this way, the male electrical connector of the bracket 106 can connect to the female electrical connector of the torque tube 104, while the female electrical connector of the bracket 106 can connect to the male electrical connector of the torque tube 104. Various types of electrical connections as well as the electrical connections to the module 102 are discussed in more detail with respect to other figures.

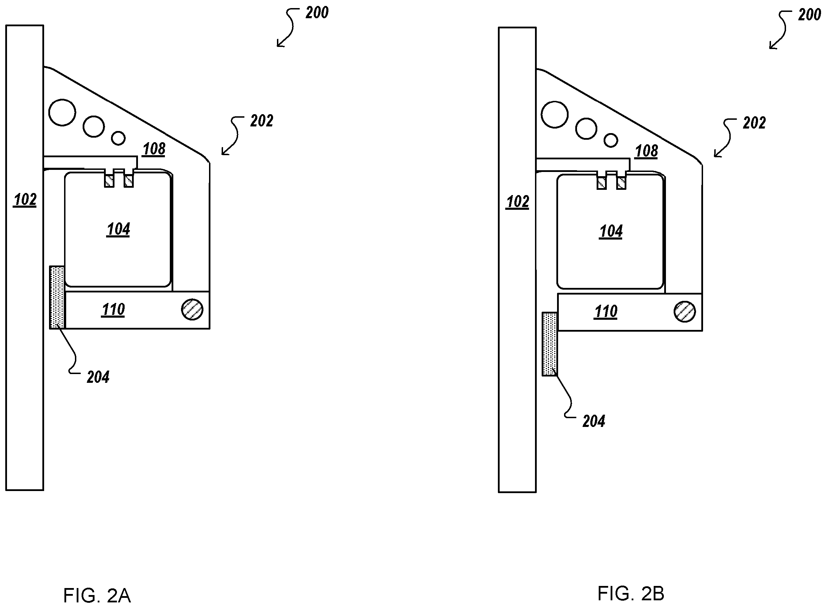

FIGs. 2A and 2B are illustrations of another example, system 200 in which both electrical and mechanical connections are made when a solar module 102 is mounted on a torque tube 104. The system 200 is substantially the same as the system 100, except that the bracket 202 differs from the bracket 106 of the system 100. Specifically, although the bracket 202 has a body 108 and access member 110 as discussed above, the bracket 202 has a rotating member connected to the end of the access member 110. The rotating member 204 is configured to rotate relative to the access member 110 to be adjacent to the side of the torque tube 104 closest to the module 102 when in an engaged state. The engaged state of the rotating member 204 is a state in which the rotating member is located between the module 102 and the torque tube 104. For example, when the rotating member 204 is positioned within the area defined by the inner edges of the body 108, access member 110, and module 102, the rotating member is in the engaged state. However, when the rotating member 204 is not within that area defined by the inner edges of the body and access member 110 and the module 102, the rotating member is not in the engaged state. FIG. 1A shows the rotating member 204 in the engaged state, while FIG. 1B shows the rotating member 204 not in the engaged state, or in the unengaged state. Inclusion of the rotating member 204 can further secure the bracket 202 to the torque tube 104, and can provide an offset of the module 102 from the torque tube 102 so that the module 102 is not in direct contact with the torque tube 204. The rotating member 204 can be formed from the same material as the body 108 and/or the access member 110, or the rotating member can be formed from a different material. In some implementations, the rotating member 204 could be formed from, or include, a cushioned material that provides a cushioned interface between the torque tube 104 and the module 102, which could absorb some force and provide some additional protection from damage for the module 102.

The aspects of the system 200 that are the same as those discussed above with reference to FIGs. 1A and 1B are not discussed again here for brevity, but it should be understood that the descriptions provided above are equally applicable to FIGs. 2A and 2B.

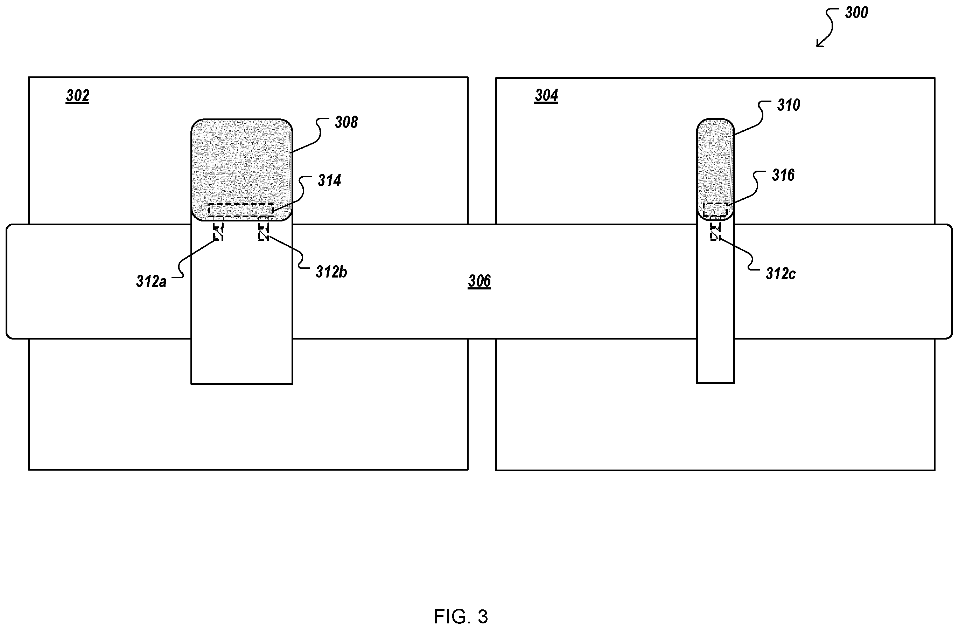

FIG. 3 is an illustration of an example system 300 in which two modules 302 and 304 are mounted to a torque tube 306 by two different brackets 308 and 310. More specifically, the view of FIG. 3 is a rear view of the modules 302 and 304, and shows example locations of the conductors 312a-c of the torque tube 306. The modules 302 and 304, torque tube 306, and brackets 308 and 310 are similar to those previously discussed, so the similarities are not discussed with reference to FIG. 3. The bracket 308 is shown as being wider than the bracket 310 to better illustrate the orientation of the conductors 312a and 312b, relative to the conductor 312c and another conductor of the torque tube 306 that is not shown in this view (i.e., a second conductor that is located behind the conductor 312c in this view) due to the orientation of the conductors 312c and the not shown conductor being similar to the orientation of the conductors 107 of FIGs. 1A and 1B.

The module 302 is shown attached (or integral with) the bracket 308, which has two conductors 312a and 312b that are similar to the conductors 107 discussed above. As shown, the conductors 312a and 312b are located at different locations along the length of the torque tube 306. As used herein, the length of the torque tube 306 is the longest dimension of the toque tube 306. For example, the panels 302 and 304 are shown at different locations along the length of the torque tube 306. In this configuration, the conductors 312a and 312b can be separated by a specified distance, and the electrical interface 314 of the bracket 308 can include electrical connectors that are similarly spaced, and configured to engage with the connectors of the conductors 312a and 312b, thereby making an electrical connection between the module 302 and the conductors 312a, 312b. Protrusions of the electrical interface 314 of the frame can be laterally offset from each other at locations corresponding to the locations of the conductors 312a and 312b. The conductors 312a and 312b can be connected to a junction box, inline fuse, inverter, or another component of a solar energy field. As such, the electrical connection created by the electrical interface 314 of the bracket 308 and the conductors 312a and 312b is a connection of the module 302 to the other components of the solar energy field.

The module 304 is connected to (or integral with) the bracket 310. With respect to the bracket 310, only one conductor 312c is visible in this view because the other conductor is in line with the conductor 312c, such that the other conductor is occluded by the presentation of the conductor 312c. In other words, both of the conductors in this configuration are located at the same, or substantially the same (e.g., within a tolerance threshold distance), location along the length of the torque tube 306. In this configuration, the two conductors of the torque tube 306 will be at different locations along the width of the torque tube 306. As used herein, the width of the torque tube refers to the distance between a first surface of the torque tube closest to an installed module, and an opposite surface of the torque tube (e.g., substantially parallel to the first surface). The electrical interface 316 of the bracket 310 can include electrical connectors that spaced similarly to the conductor 312c and the other electrical conductor not shown, and configured to engage with the connectors of those conductors, thereby making an electrical connection between the module 304 and each of the conductor 312c and the occluded conductor. For example, two or more protrusions of the electrical interface 316 can be longitudinally offset from each other at locations corresponding to the locations of the conductors of the torque tube.

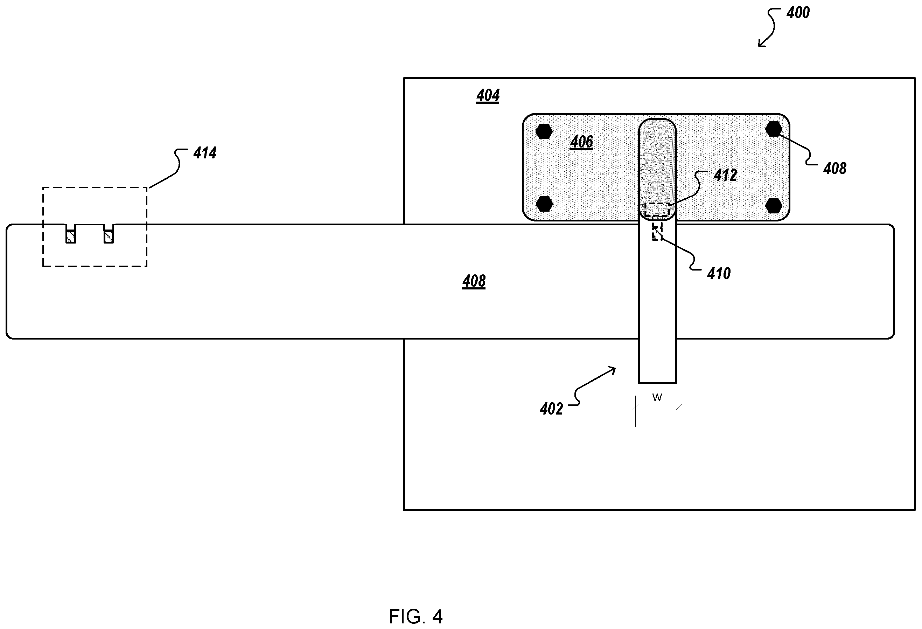

FIG. 4 is an illustration of an example system 400 in which a bracket 402 is mounted to a module 404. The bracket 402 can be similar to the brackets previously discussed, and specifically the brackets 106 and 310. For example, the arrangement of the conductor 410 and an occluded conductor can be similar to that discussed above with reference to FIGs. 1A, 1B, and 3. Also, the configuration of the electrical interface 412 of the bracket 402 can be similar to that of the electrical interface 316 and the electrical interface 120. FIG. 4 also shows the alternative configuration of conductors within the dashed box 414, which is similar to the configuration of the conductors 312a and 312b discussed with reference to FIG. 3.

However, as shown in FIG. 4, the bracket 402 is connected to the module 404 by way of a mounting plate 406. The mounting plate 406 can be used to help distribute the force of exerted on the module 404 by connecting the module to the torque tube 407, while minimizing the amount of material required to manufacture the bracket 402. For example, by distributing the force on the module 404 using the mounting plate 406, the bracket 402 can have a width ("W") that is less than the width that would be required to otherwise distribute the force exerted on the module 404 without the use of the mounting plate 406. In some implementations, the mounting plate 406 can be secured to the module 404 by way of bolts 408. Of course, other fasteners could be used. Adhesives can also be used to secure the mounting plate 406 to the module 404. The width of the mounting plate 406 can be measured in the same direction as the length of the torque tube when the bracket 402 is installed on the torque tube 408.

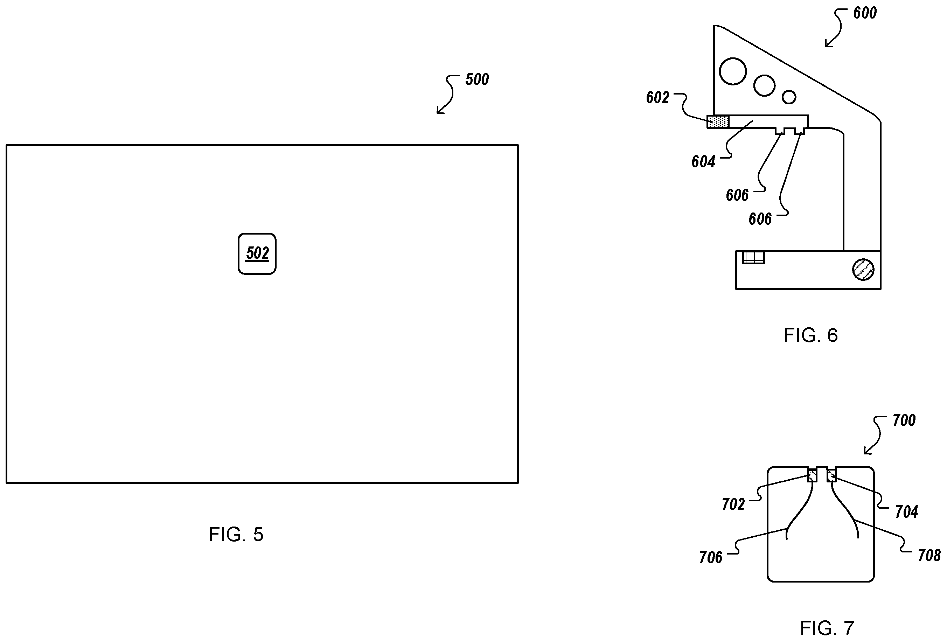

FIG. 5 is an illustration of an example connectorized module 500. The connectorized module 500 is a module similar to those discussed above, and includes a connector 502 that enables plug and play functionality for the module 500. For example, the connector 502 of the module 500 can be a panel receptacle, cable coupler, multi-contact 4mm ("MC4") connector or another connector appropriate for connecting electrical components of a solar field installation. The connector 502 can be configured to connect directly to a corresponding connector on a bracket like those discussed above, or can be configured to connect to a cable that will connect to the bracket, or be passed through the bracket to connect to the conductors of the torque tube.

FIG. 6 is an illustration of an example bracket 600 that can connect to the connectorized solar module/panel 500. The bracket 600 is similar to the bracket 106 discussed with reference to FIGs. 1A and 1B, and includes a connector 602 that is configured to interface with (e.g., connect to) the connector 502 of the connectorized module 500. More specifically, when the bracket 602 is mounted to the module 500, the connector 602 will interface with (e.g., plug into and/or be plugged into by) the connector 502 of the module 500 to create an electrical connection between the module 500 and the electrical interface 604 of the bracket 600. The electrical interface 604 can include a conduit or another path to route conductors from the connector 602 to the two protrusions 606 of the electrical interface 604. While two protrusions are shown, the electrical interface 604 could have one protrusion and one recess and/or one male connector and one female connector. In any case, the protrusions 606 (or other configurations of electrical connectors) of the electrical interface 604 can be configured to interface with (e.g., connect to) the conductors of a torque tube, thereby creating both an electrical as well as physical connection (e.g., other than the physical connection created by the connections of the conductors). More specifically, the physical connection can be a connection that supports the weight of a module, such as the non-electrical physical contact between the torque tube and one or more of the bracket and/or the module.

FIG. 7 is an illustration of an example torque tube 700 that includes conductors 702 and 704 configured to facilitate an electrical connection between a solar module and other components of a solar field installation (e.g., inverter). The conductors 702 and 704 can be similar to those previously discussed with respect to the other torque tubes described herein. As shown, the torque tube 700 includes two recesses in which the conductors 702 and 704 can be located. However, the torque tube 700 could have one protrusion and one recess and/or one male connector and one female connector that provide connection points for the conductors 702 and 704. FIG. 7 also shows that the torque tube 700 can include two cables (e.g., electrical wires) 706 and 708 that are housed within the torque tube 700. While two cables 706 and 708 are shown, more cables could be housed within the torque tube 700. Routing the cables 706 and 708 through the torque tube 700 enables the torque tube 700 to function as a conduit for the cables 706 and 708, thereby providing protection from damage. Furthermore, configuring the connection between the conductors 702 and 704 using connectors that interface with one or more of the bracket (e.g., 600) and/or a solar module, also reduces the risk of damage to the conductors, as well as the risk of shock. Furthermore, the installation time is reduced by implementing a plug and play configuration.

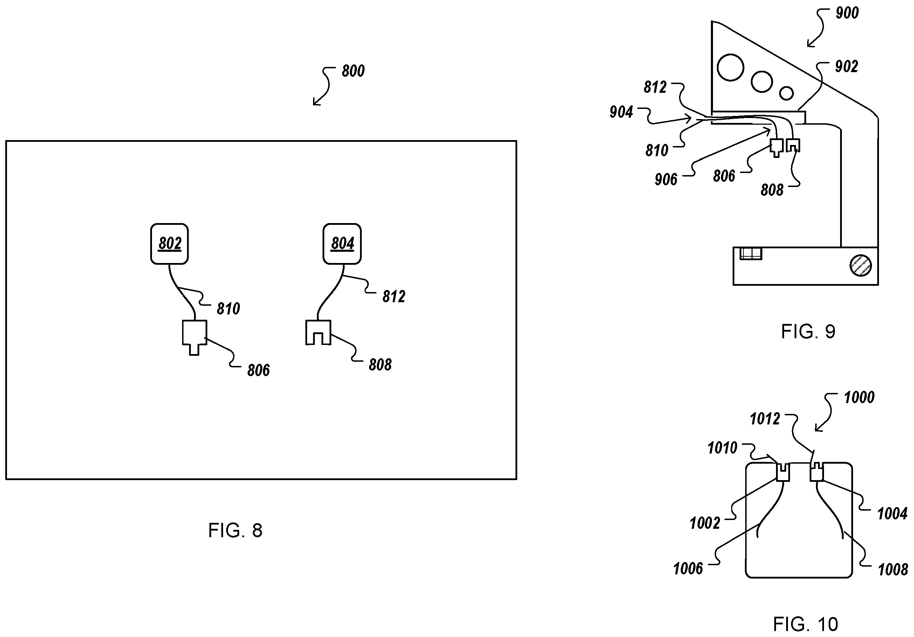

FIG. 8 is an illustration of an example solar module 800 that includes junction boxes 802 and 804 and connectors 806 and 808. The junction boxes 802 and 804 contain terminals that facilitate the transfer of power from the solar module 800 to other components in a solar installation (e.g., inverters). The junction box 802 is connected to the connector 806 by a cable 810 (e.g., electrical wire), and the junction box 804 is connected to the connector 808 by a cable 812. One of the junction boxes 802 or 804 can provide a positive terminal connection, while the other junction box 804 or 802 can be a negative terminal connection. As such, the connectors 806 and 808 can have different connection configurations (e.g., male vs. female) to maintain consistency in connections throughout the system, and to prevent misconnecting terminals.

FIG. 9 is an illustration of an example bracket 900 in which the electrical interface 902 forms a conduit through which cables/connectors of a solar module are passed. For example, the electrical interface 902 can include a void having an input port 904 and an output port 906. The input port 904 can be an opening through which the connectors 806 and 808 of the module 800 can be inserted into the bracket 900. The output port 906 can be an opening in the electrical interface 902 through which the connectors 806 and 808 exit the electrical interface 902, e.g., to connect to the conductors of a torque tube. As shown, the electrical interface of the bracket 900 houses the cables 810 and 812, thereby protecting the cables 810 and 812 from damage (e.g., crimping, cutting, or other damage.

In some implementations, the connectors 806 and 808 can be secured to the bracket 900, e.g., as panel mount or bulkhead connectors, and positioned so that when the bracket 900 is placed on a torque tube, such as the torque tube 1000 discussed below, the alignment of the connectors 806 and 808 and the connectors 1002 and 1004 will allow the connectors to mate, thereby creating the electrical connection between the module 800 and the torque tube 1000 due to the force corresponding to the weight of the module 800 automatically pushing the connectors 806 and 808 into the connectors 1002 and 1004.

FIG. 10 is an illustration of an example torque tube 1000 that includes connectors 1002 and 1004 for the conductors housed within the torque tube 1000. The connector 1002 is a female connector configured to connect to the male connector 806 discussed above, thereby making an electrical connection between the torque tube 1000 and the solar module 800. The connector 1004 is a male connector configured to connect to the connector 808 discussed above, thereby making an electrical connection between the torque tube 1000 and the solar module 800. The connector 1002 is connected to a cable (e.g., electrical wire) 1006 that is housed within the torque tube 1000. The connector 1004 is connected to a cable (e.g., electrical wire) 1008 that is also housed within the torque tube 1000. The cables 1006 and 1008 can be routed, for example, through the torque tube 1000 and connected to one or more of other solar modules similar to the solar module 800 and/or or other solar field components, such as an inverter.

In some implementations, the connectors 1002 and 1004 can be panel mount or bulkhead connectors that are configured to mate with the connectors 806 and 808, as discussed above.

The torque tube 1000 includes protective covers 1010 and 1012 that are pivotably/rotatably attached to the torque tube 1000. The protective covers 1010 and 1012 can be made of plastic, rubber, or another appropriate material that can provide a barrier between the connectors 1002 and 1004 and the external environment elements (e.g., water, dirt, sand, etc.). The protective covers 1010 and 1012 can include springs that bias the protective covers 1010 and 1012 to a protective state when less than a specified amount of force is applied to rotate the protective covers 1010 and 1012 to an exposed/accessible state. For example, the protective covers 1010 and 1012 can cover the connectors 1002 and 1004 in the protective state, and leave the connectors 1002 and 1004 exposed and accessible for insertion of the connectors 806 and 808 in the exposed/accessible state.

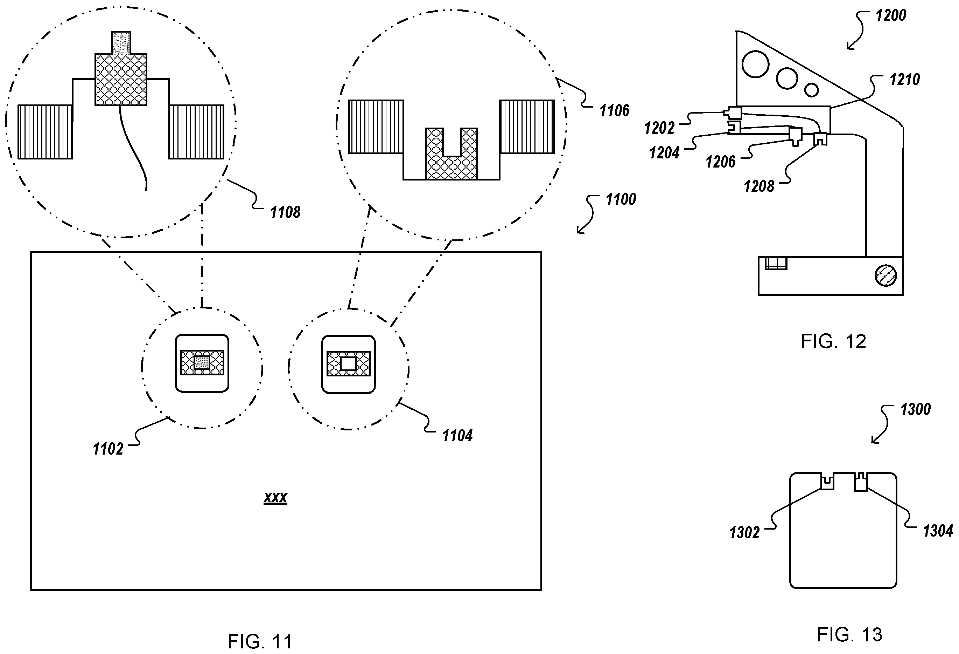

FIG. 11 is an illustration of an example solar module 1100 that includes panel mount connectors 1102 and 1104. As shown, the panel mount connector 1102 is a male connector, and the panel mount connector 1104 is a female connector. In some implementations, the panel mount connectors 1102 and 1104 can be integrated into the solar module 1100, such that corresponding connectors of a mount, such as the bracket 1200 discussed below, can be plugged into the panel mount connectors 1102 and 1104 when the bracket 1200 is installed on the module 1100. For example, the connectors 1102 and 1104 can positioned at locations on the module 1100 at which the connectors 1202 and 1204 of the bracket 1200 will be aligned when the bracket 1200 is installed on the module 1100. When the bracket 1200 is attached to the module 1100, the connectors 1202 and 1204 will mate with the connectors 1102 and 1104, thereby making an electrical connection. Side views with additional details of the example configurations of connectors 1102 and 1104 are shown in the circles 1106 and 1108. The example configuration shown in the circle 1108 is a male panel mount style connector, and the example configuration shown in the circle 1106 is a female bulkhead mount style connector. Often one connector type will be used throughout a system, but the two different types are shown, and any combination of connector types can be used for any of the connectors discussed herein.

FIG. 12 is an illustration of an example bracket 1200 that includes secured connectors 1202, 1204, 1206, and 1208 in the electrical interface 1210. The secured connectors 1202, 1204, 1208, and 1206 can have configurations similar to those depicted in the circles 1106 and/or 1108. The types of connectors used is not critical as long as the same types of connectors are used for pairs of connectors (e.g., those intended to be mated). As discussed above, the connectors 1202 and 1204 can be spaced so that they will respectively align with the connectors 1104 and 1102 when the bracket 1200 is installed on the module 1100. Alternatively, if the bracket 1200 is integrated into the module 1100 during manufacturing, the connectors 1202 and 1204 can be omitted by hardwiring the connectors 1206 and 1208 to the module 1100.

The secured connectors 1206 and 1208 can be arranged on the bracket 1200 at locations that align with the connectors 1302 and 1304 of the torque tube 1300 discussed below. In that way, when the bracket 1200 is placed on the torque tube 1300, the connector 1206 will automatically mate with the connector 1302, and the connector 1208 will automatically mate with the connector 1304 due to the weight of the bracket 1200 and/or module 1100 to which the bracket 1200 is attached. As such, placing the bracket 1200 on the torque tube 1300 creates a physical connection between the torque tube 1300 (e.g., the exterior structure of the torque tube 1300) of FIG. 13 and the interior edges of the bracket 1200, while also creating an electrical connection by way of the mating of the connectors 1206 and 1302 and the mating of the connectors 1208 and 1304.

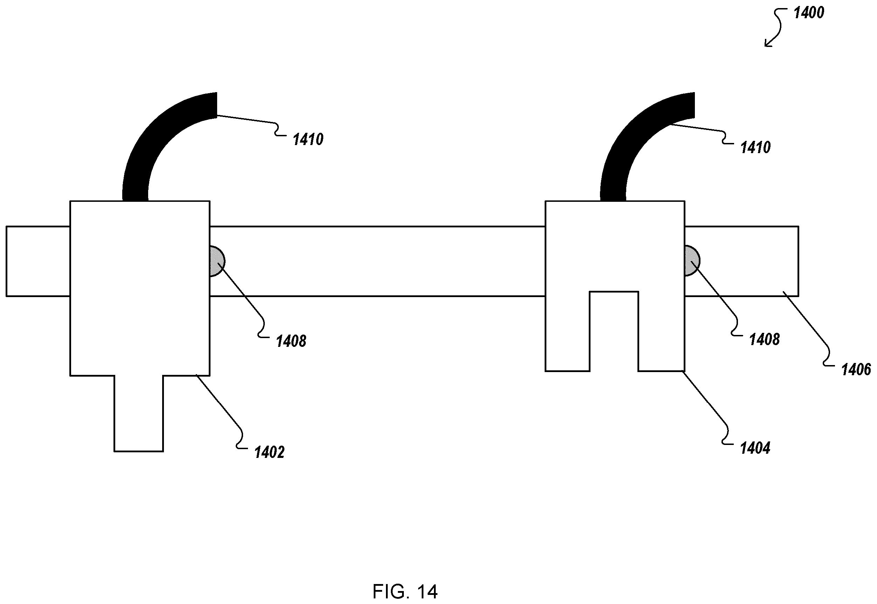

The connectors 1206 and 1208 are referred to as secured connectors because they are fixed in place, or otherwise secured to the bracket 1200, rather than being free to move independent of the bracket 1200 (as pigtail connectors would). The connectors 1206 and 1208 can be secured, for example, by being molded into the bracket 1200 during the manufacturing process, or by being inserted into receptacles with an engagement mechanism (e.g., snap, pressure, etc.) that keeps the connectors 1206 from moving. An example engagement mechanism is discussed below with reference to FIG. 14.

FIG. 13 is an illustration of an example torque tube 1300 to which the bracket 1200 can be attached. The torque tube 1300 includes two connectors 1302 and 1304, which can be panel mount or bulkhead connectors or other types of electrical connectors. As discussed above, the connectors 1302 and 1304 can be arranged so that they automatically mate with the connectors 1206 and 1208 when the bracket 1200 is placed on the torque tube 1300.

FIG. 14 is an illustration of an example system 1400 that includes secured connectors 1402 and 1404. Each of the secured connectors 1402 and 1404 are secured to a substrate 1406. The substrate 1406 could be a surface of a solar module, a surface of a bracket (e.g., the electrical interface of the bracket), or a surface of a torque tube. In this example, each of the connectors 1402 and 1404 includes an engagement mechanism 1408 that secures the connectors to the substrate 1406, and is connected to a respective cable (e.g., electrical wire). To prevent movement of the connectors 1402 and 1404, the engagement mechanism 1408 can operate as a "snap-click" type connection in which the engagement mechanism 1408 snaps into place when a sufficient amount (e.g., specified threshold amount) of force is applied, and clicks into a receiving area of the substrate 1406 (e.g., a fixed location), which holds the engagement mechanism 1408 in place until sufficient force (e.g., specified threshold amount of force) is applied to dislodge the engagement mechanism 1408.

Various combinations of connection interfaces can be used. For example, bulkhead to wire assembly, Bulkhead to Panel mount, Panel mount to Bulkhead, Panel mount to wire assembly, and any other combinations of connectors can be used.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

## Claims

1. A system comprising:
a bracket including an electrical interface, the bracket configured to i) connect to a solar module and ii) retain a torque tube within a perimeter of the bracket; and
one or more connectors configured to interface with corresponding connectors of the torque tube upon insertion of the torque tube within the perimeter of the bracket, wherein the insertion of the torque tube within the perimeter of the bracket creates both of a physical and an electrical connection with the torque tube.

2. The system of claim 1, wherein
a shape of the bracket forms an interior void in which the torque tube is received; and
the one or more connectors are located on an interior top surface of the backet.

3. The system of claim 2, wherein the one or more connectors extend away from the interior top surface of the bracket, and are configured to engage with conductors that are located at a top surface of the torque tube.

4. The system of claim 3, wherein:
the bracket comprises an access member that is pivotable or rotatable relative to a body of the bracket; and
the access member is configured to pivot or rotate between an open state and a closed state.

5. The system of claim 4, wherein the access member includes a rotating member that is located at an end of the access member and configured to maintain separation between the torque tube and the solar module.

6. The system of claim 4, wherein the access member includes a locking mechanism that is configured to secure or lock the access member in the closed state, and
optionally wherein the locking mechanism is one or more of a magnet, a latch, or a screw.

7. The system of any preceding claim, wherein the electrical connection is automatically made when the bracket is placed on the torque tube.

8. The system of claim 7, wherein the electrical connection is between conductors located within a recess of the torque tube and protrusions of the bracket.

9. The system of claim 8, wherein the one or more connectors comprise two or more protrusions that are laterally offset from each other within the frame or that are longitudinally offset from each other within the frame.

10. The system of any preceding claim, wherein the bracket is attached to a mounting plate having a width that is greater than the width of the bracket.

11. The system of any preceding claim, wherein the bracket comprises an electrical connector configured to electrically connect the bracket to the solar module.

12. The system of any preceding claim, wherein the solar module comprises one or more junction boxes, including terminals, that facilitate a transfer of power from the solar module, and
optionally wherein a positive terminal connection of the one or more junction boxes has a different connection configuration than a negative terminal connection of the one or more junction boxes.

13. The system of any preceding claim, wherein the bracket includes a void configured to route cables between the solar module and the torque tube.

14. The system of claim 13, wherein first connectors of the cables are mounted to the bracket.

15. The system of claim 14, wherein the torque tube includes second connectors that are configured to mate with the first connectors that are mounted to the bracket, and
optionally wherein one or more of the first connectors or the second connectors includes an engagement mechanism that is configured to snap into a fixed location upon exertion of a sufficient amount of force.
